# EUROPEAN PATENT SPECIFICATION

(11) **EP 3 950 397 B1**
(45) Date of publication and mention of the grant of the patent: **10.12.2025**
(21) Application number: 20783587.7
(22) Date of filing: 16.01.2020
(51) Int. Cl.: B60K 17/24

(54) **CENTER BEARING**
MITTELLAGER
PALIER CENTRAL

(30) Priority: 29.03.2019 JP 2019065411
(43) Date of publication of application: 09.02.2022
(73) Proprietor: IJTT Co., Ltd., Yokohama-shi Kanagawa 221-0056 (JP)
(72) Inventor: HAMANAKA, Yoshihisa, Ebina-shi, Kanagawa 243-0434 (JP); KATO, Sou, Ebina-shi, Kanagawa 243-0434 (JP); ISHIKAWA, Tomohiro, Ebina-shi, Kanagawa 243-0434 (JP)
(74) Representative: Schaumburg und Partner Patentanwälte mbB
(86) International application number: PCT/JP2020/001320
(87) International publication number: WO 2020/202703

(56) References cited:
- JP-A- 2014 219 049
- JP-A- 2017 144 882
- JP-A- 2017 144 882
- US-A- 5 829 892
- US-A1- 2002 139 603
- US-B2- 7 534 048

## Description

### BACKGROUND

### Technical Field

The present invention relates to a center bearing for fastening and supporting a propeller shaft to a chassis.

### Background Art

Generally, a vehicle's propeller shaft is rotatably supported by a center bearing that is fastened and supported on a chassis.

As for the center bearing, as described in Patent Literature 1 which discloses a central bearing according to the preamble in claim 1, one with a rubber-like elastic body having a shaft hole part for supporting a propeller shaft axially and a bracket for retaining the rubber-like elastic body to a chassis is known.

Furthermore, with the center bearing described in Patent Literature 1, concave grooves are formed in the center of the upper and lower sides of the rubber-like elastic body formed in a rectangular shape, and a bracket is formed in a rectangular shape so as to cover the rubber-like elastic body. With this configuration, since a gap is formed between the upper and lower sides of the rubber-like elastic body and the bracket by a concave groove, the rubber-like elastic body can be deformed relatively freely in the vertical direction. Consequently, it is possible to prevent the vibration of the propeller shaft from transmitting to the chassis.

### Citation List

### Patent Literature

[Patent Literature 1] JP 2017-144882 A
[Patent Literature 2] JP 2014-219049 A
[Patent Literature 3] JP 2011-79394 A
Each of the documents US 2002/139603 A1 and US 7 534 048 B2 disclose a bearing comprising a rubber-like elastic body with a shaft hole part. The elastic body includes first slits and second slits, wherein the first slits are formed inside and the second slits are formed outside, in a radial direction with respect to a center of the shaft hole part.

### SUMMARY

### Technical Problem

However, with the above center bearing of Patent Literature 1, for example, when the vehicle starts and the propeller shaft vibrates relatively significantly, the concave groove portions in the rubber-like elastic body may bend downward and contact the bracket. In this case, there is a possibility that the rubber-like elastic body is unable to absorb the vibration of the propeller shaft sufficiently.

Therefore, it is an object of the present invention to solve the above problem by providing a center bearing that can absorb vibration sufficiently with a rubber-like elastic body even when a propeller shaft vibrates relatively significantly.

### Solution to Problem

According to one aspect of the present invention, a center bearing according to claim 1 is provided. The center bearing has a rubber-like elastic body with a shaft hole part for supporting a propeller shaft, and a bracket that retains the rubber-like elastic body to a chassis, where the rubber-like elastic body is formed in a rectangular shape with a concave groove formed in a center in an upper side and a lower side of the rectangular rubber-like elastic body, and the bracket is formed in a rectangular shape so as to cover the rectangular rubber-like elastic body, and the bracket has a horizontal member that extends in a left-right direction and faces the concave groove, the concave groove has a groove bottom part that is spaced apart from the horizontal member in a vertical direction, and in the rubber-like elastic body between the shaft hole part and the groove bottom part, a first slit is formed inside and a second slit is formed outside, in a radial direction with respect to a center of the shaft hole part.

hen vertical displacement of the propeller shaft is equal to or greater than a predetermined value, the groove bottom part contacts the horizontal member.

Furthermore, the groove bottom part, the first slit and the second slit are each formed in an arc shape that is concentric with the shaft hole part.

Furthermore, the second slit is arranged so as to overlap at least part of the first slit in a circumferential direction with respect to the center of the shaft hole part.

Furthermore, in the rubber-like elastic body, in the rubber-like elastic body, metal plates are embedded along left and right sides of the rubber-like elastic body, and, in the rubber-like elastic body, between the metal plate and the shaft hole part, a third slit is formed inside and a fourth slit is formed outside in the radial direction.

Furthermore, the third slit and the fourth slit are each formed in an arc shape that is concentric with the shaft hole part.

Furthermore, the fourth slit is arranged so as to overlap at least part of the third slit in the circumferential direction with respect to the center of the shaft hole part.

Furthermore, in a central portion of the third slit in the vertical direction, a protruding part that protrudes inward or outward in the radial direction from an inner peripheral surface of the third slit is formed.

With the center bearing according to the present invention, vibration can be absorbed sufficiently by a rubber-like elastic body even when a propeller shaft vibrates relatively significantly.

### BRIEF DESCRIPTION OF THE DRAWINGS

FIG. 1 is a left side view of a propeller shaft including a center bearing;
FIG. 2 is an exploded perspective view to show a schematic structure of a center bearing;
FIG. 3 is a rear view of a rubber-like elastic body of a center bearing;
FIG. 4A is a partial cross-sectional view taken along line IVa-IVa in FIG. 3, and FIG. 4B is a partial cross-sectional view taken along line IVb-IVb in FIG. 3;
FIGs. 5 show the details of a bracket that supports a rubber-like elastic body, where FIG. 5A is a plan view, FIG. 5B is a rear view, and FIG. 5C is a left side view;
FIG. 6 is a rear view of a rubber-like elastic body as attached to a bracket;
FIG. 7 is a rear view to show the deformation of a rubber-like elastic body in the radial direction;
FIG. 8 is a graph to show the spring characteristics of a rubber-like elastic body;
FIG. 9 is a plan view to show the deformation of a rubber-like elastic body in the axial direction;
FIG. 10 is a partial cross-sectional view to show the deformation of a rubber-like elastic body in the axial direction;
FIGs. 11 show the rubber-like elastic bodies according to the first and second variations, where FIG. 11A is a rear view, and FIG. 11B is a left side view;
FIG. 12 is a rear view of a rubber-like elastic body according to a third variation; and
FIG. 13 is a rear view of a rubber-like elastic body according to a fourth modification as attached to a bracket.

### DESCRIPTION OF THE EXAMPLE EMBODIMENT

Hereinafter, a preferred embodiment of the present invention will be described below in detail with reference to the accompanying drawings. Note that the up, down, front, back, left, and right directions in the drawings indicate, respectively, the up, down, front, back, left, and right directions of a vehicle with a propeller shaft 1 (not illustrated). However, these directions are only defined for convenience of explanation.

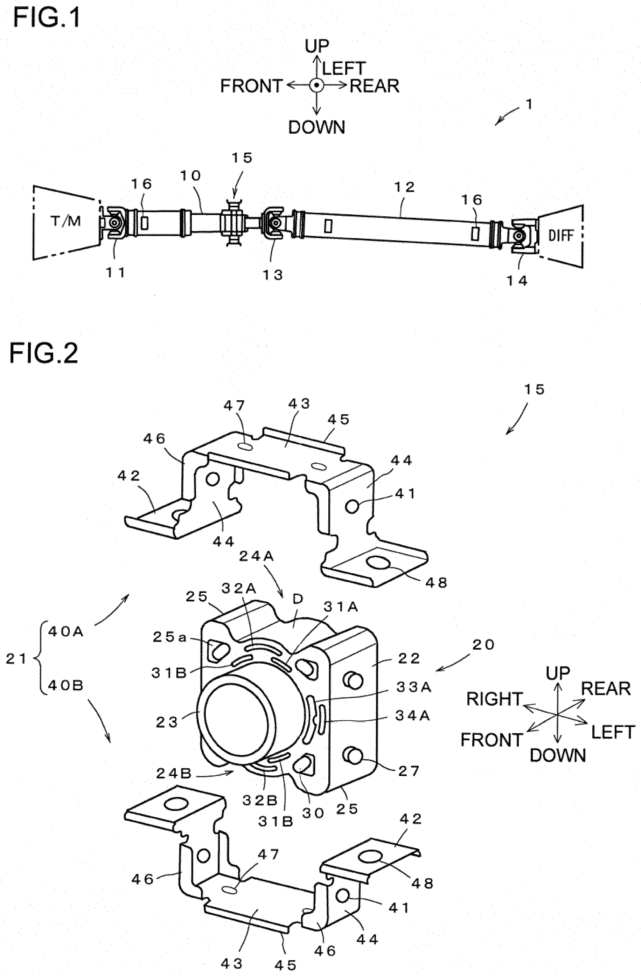

As illustrated in FIG. 1, in the propeller shaft 1, a first propeller shaft 10 is connected to a transmission TM via a TM-side universal joint 11, the first propeller shaft 10 and a second propeller shaft 12 are connected via an intermediate universal joint 13, and the second propeller shaft 12 and a differential DIFF are connected via a differential-side universal joint 14. Furthermore, the first propeller shaft 10 is fastened and supported to a chassis of the vehicle (not shown) via a center bearing 15. Note that the reference numeral 16 is a balance weight for adjusting the mass eccentricity of the first propeller shaft 10 and the second propeller shaft 12.

The power of the transmission TM is transmitted to the TM-side universal joint 11, the first propeller shaft 10, the intermediate universal joint 13, the second propeller shaft 12, the differential-side universal joint 14 and the differential DIFF, in order.

As illustrated in FIG. 2, the center bearing 15 has a rubber-like elastic body 20 that is formed in a rectangular shape, and a bracket 21 formed in a rectangular shape to cover the rubber-like elastic body 20.

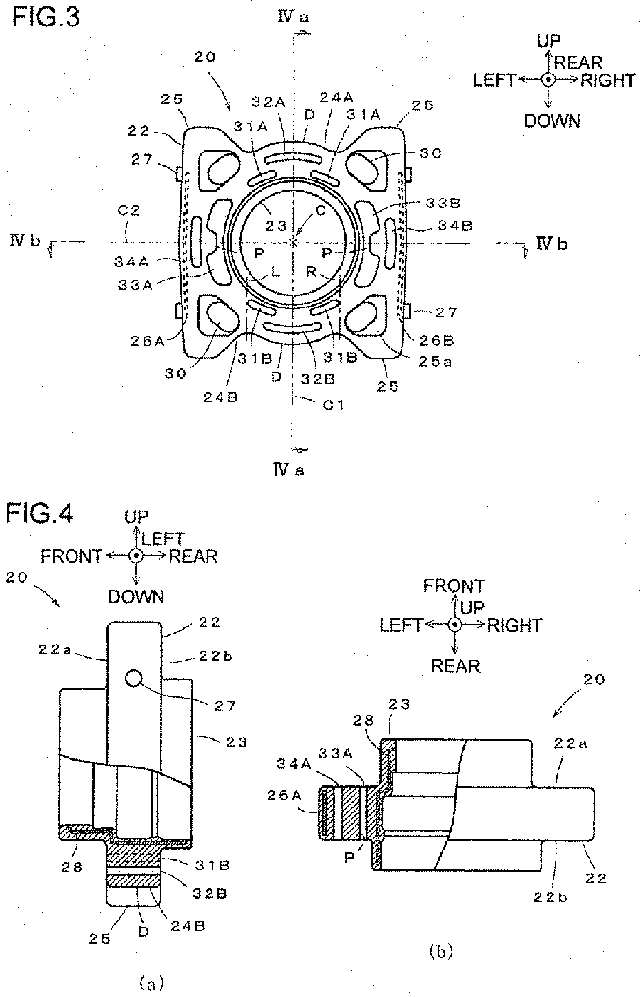

As illustrated in FIG. 3, the rubber-like elastic body 20 has a rectangular block body 22, and a shaft hole part 23 that is formed at the center of the block body 22. Note that, with the present embodiment, the "axial direction", the "radial direction", and the "circumferential direction" are based on the center C of the shaft hole part 23.

On the upper and lower sides (or the top and bottom surfaces) of the block body 22, a pair of upper and lower concave grooves 24Aand 24B are formed at the center in the left-right direction, and leg parts 25 are formed in positions left and right to each of the upper and lower concave grooves 24A and 24B.

A pair of left and right flat metal plates 26A and 26B, embedded along the left and right sides (or the left and right side surfaces) of the block body 22, are provided at both left and right end parts of the block body 22. Protrusions 27 that engage with the holes 41 of the bracket 21 (see FIG. 2), which will be described later, are formed in upper and lower positions on the left and right sides of the block body 22.

Furthermore, as illustrated in FIG. 3, FIG. 4A, and FIG. 4B, in the block body 22, a number of slits 30 to 34B, which penetrate in the axial direction, are formed from the front surface (front surface 22a) to the rear surface (rear surface 22b). The details of the concave grooves 24A and 24B and the slits 30 to 34B will be described later.

The shaft hole part 23 is formed to penetrate from the front surface 22a to the rear surface 22b of the block body 22. Furthermore, the shaft hole part 23 is formed in a cylindrical shape, so as to protrude from the front surface 22a and the rear surface 22b of the block body 22 toward the front and the rear in the axial direction.

Although not illustrated, a bearing for supporting the first propeller shaft 10 rotatably is fitted and fixed to the inner peripheral surface of the shaft hole part 23. Note that the reference numeral 28 is a reinforcing metal tube embedded in the shaft hole part 23.

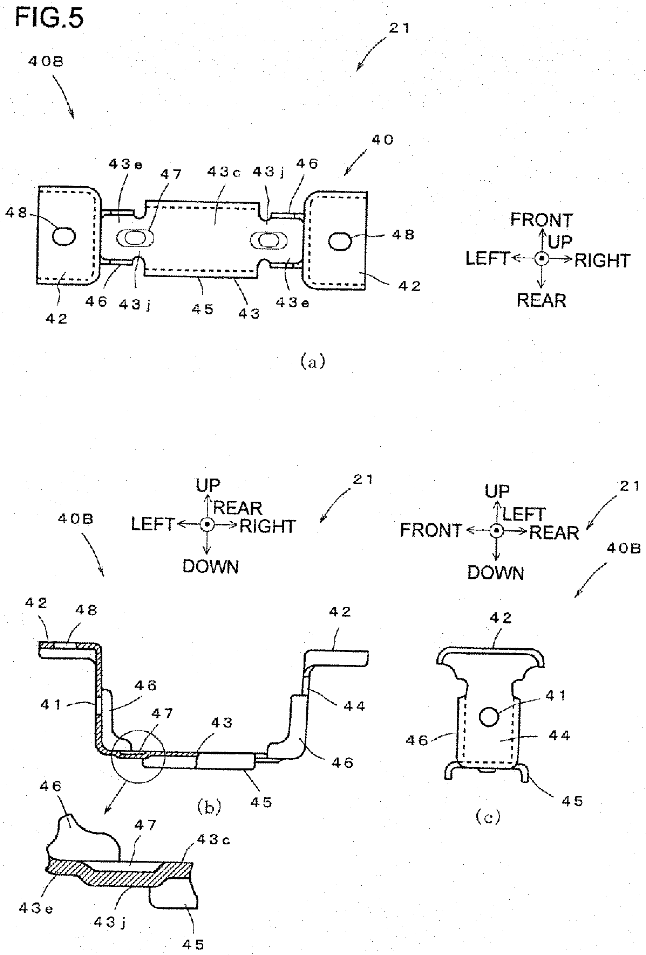

As illustrated in FIG. 2 and FIG. 5A to FIG. 5C, a pair of upper and lower divided brackets 40A and 40B, formed in a U-shaped or hat-shaped cross-section, are used as the bracket 21. Flanges 42 for connecting the divided brackets 40A and 40B with each other and fixing them to the chassis (not illustrated) are formed in the upper and lower divided brackets 40A and 40B. Note that the upper and lower divided brackets 40A and 40B are vertically symmetrical to each other. Therefore, only the shape of the lower divided bracket 40B will be described here, and the description of the upper divided bracket 40A will be omitted.

The lower divided bracket 40B has a horizontal member 43 that extends in the left-right direction and faces the lower concave groove 24B of the rubber-like elastic body 20, a pair of left and right divided vertical members 44 that arise from both ends of the horizontal member 43, and the flange 42 that extends outward in the left-right direction from the upper end of the divided vertical member 44.

The center part 43c of the horizontal member 43 in the left-right direction is formed to have substantially the same length in the left-right direction as the lower concave groove 24B of the rubber-like elastic body 20 (see FIG. 3). In the front-back direction, the center part 43c of the horizontal member 43 in the left-right direction is formed to have a width longer than the width of the block body 22 of the rubber-like elastic body 20 (see FIGs. 4). On the other hand, in the front-back direction, both end parts 43e of the horizontal member 43 in the left-right direction and the divided vertical members 44 on both left and right sides are formed to have the same width as the block body 22.

Furthermore, in the lower divided bracket 40B, a first reinforcing rib 45 is provided in the position of the center part 43c of the horizontal member 43. The first reinforcing rib 45 is formed by bending both ends (front end and rear end) of the horizontal member 43 in the width direction downward. Consequently, the center part 43c of the horizontal member 43 and the first reinforcing rib 45 have a U-shaped cross-section on the whole.

Furthermore, in the lower divided bracket 40B, second reinforcing ribs 46, formed in the shape of the letter L, are provided from both end parts 43e of the horizontal member 43 to positions of center parts of the divided vertical member 44 in the vertical direction. The second reinforcing ribs 46 are formed by bending both ends (front end and rear end) of the horizontal member 43 and the divided vertical member 44 in the width direction radially inward. Consequently, both end parts 43e of the horizontal member 43, the divided vertical member 44 and the second reinforcing ribs 46 have a U-shaped cross-section on the whole.

Holes 41 to be engaged with the protrusions 27 of the block body 22 (see FIG. 3) are formed in the left and right divided vertical members 44.

Joint parts 43j between the center part 43c and both end parts 43e of the horizontal member 43 are positioned between a first reinforcing rib 45 and second reinforcing ribs 46. Recessed boss parts 47 are formed in the joint parts 43j for increased strength.

The flanges 42 are formed by bending both ends (front end and rear end) in the width direction downward and have a U-shaped cross-section. Bolt insertion holes 48 for fastening the upper and lower divided brackets 40A and 40B each other with bolts and nuts are formed in the flanges 42.

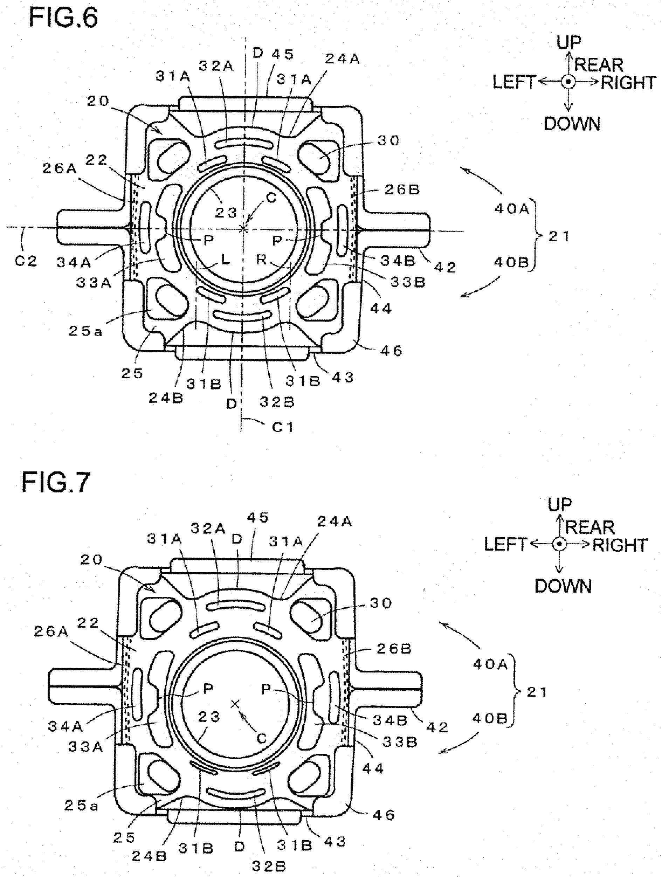

As illustrated in FIG. 6, when the rubber-like elastic body 20 is attached to the bracket 21, the block body 22 is interposed between the divided brackets 40A and 40B in the vertical direction with the shaft hole part 23 fitted in the bearing (not illustrated). Then, when the protrusions 27 of the block body 22 are fitted in the holes 41 of the divided bracket 40, the block body 22 is positioned in the divided brackets 40A and 40B, the bearing is fixed to the shaft hole part 23, and the leg parts 25 of the block body 22 are engaged with the L-shaped second reinforcing ribs 46 and retained. Furthermore, in this state, bolts are inserted into the bolt insertion holes 48 of the flanges 42 and fastened with nuts, so that the divided brackets 40A and 40B are connected with each other, and thereupon the center bearing 15 is completed.

Furthermore, when the center bearing 15 is actually used, after inserting the first propeller shaft 10 (see FIG. 1) in the bearing of the shaft hole part 23, when the divided brackets 40A and 40B are connected with each other with bolts and nuts, the flanges 42 are fastened to the chassis (not illustrated) together. Consequently, the first propeller shaft 10 is fastened and supported to the chassis via the center bearing 15.

Here, the first propeller shaft 10 vibrates in the axial direction and the radial direction during traveling of the vehicle. Meanwhile, the center bearing 15 of the present embodiment has the rubber-like elastic body 20 interposed between the first propeller shaft 10 and the chassis, so that the vibration to transmit from the first propeller shaft 10 to the chassis can be reduced.

Furthermore, with the present embodiment, the block body 22 of the rubber-like elastic body 20 is formed in a rectangular shape, and the leg parts 25 provided at four corners are retained by the bracket 21. Therefore, in the positions of the leg parts 25 in the circumferential direction, the distance from the shaft hole part 23 to the bracket 21 in the radial direction in the rubber-like elastic body 20 can be made relatively long. Consequently, a sufficient length for the rubber-like elastic body 20 to elastically deform in the radial direction can be reserved, so that the transmission of vibration can be effectively reduced.

Furthermore, in the block body 22 between the shaft hole part 23 and the leg parts 25, leg-side slits 30 for absorbing the vibration of the first propeller shaft 10 are formed. The leg-side slits 30 are formed in a long-hole shape to extend in the circumferential direction. Note that the reference numeral 25a is concave parts, which are formed by making dents in the front surface 22a and the rear surface 22b of the block body 22 (see FIGs. 4) in order to adjust the elasticity of the leg parts 25. The leg-side slits 30 are formed in the concave parts 25a.

Now, in the block body 22 according to the present embodiment, the upper and lower concave grooves 24A and 24B and the first to fourth slits 31A to 34B are provided as means for absorbing the vibration of the first propeller shaft 10 in addition to the leg-side slits 30.

Hereinafter, the upper and lower concave grooves 24A and 24B and the first to fourth slits 31A to 34B will be described. Note that the upper and lower concave grooves 24A and 24B and the first to fourth slits 31A to 34B are provided symmetrically in the vertical and left-right directions with respect to the center C of the shaft hole part 23 of the rubber-like elastic body 20. Therefore, here, the lower concave groove 24B, the lower first and second slits 31B and 32B, and the third and fourth slits 33A and 34A on the left side will be mainly described, and the upper concave groove 24A, the upper first and second slits 31A and 32A, and the third and fourth slits 33B and 34B on the right side will not be described in detail.

First, as illustrated in FIG. 3 and FIG. 6, the lower concave groove 24B has a groove bottom part D, which is separate from the horizontal member 43 of the lower divided bracket 40B in the vertical direction. The groove bottom part D is formed in an arc shape that is concentric with the shaft hole part 23. That is, the groove bottom part D has a cross section in which the center of the lower concave groove 24B in the left-right direction protrudes downward.

According to the present embodiment, gaps are formed between the upper and lower sides of the block body 22 and the horizontal member 43 of the bracket 21 by the upper and lower concave grooves 24A and 24B. Consequently, the rubber-like elastic body 20 can be freely deformed in the vertical direction compared to the case without the concave grooves 24A and 24B. As a result, vibration can be effectively absorbed by allowing the rubber-like elastic body 20 to deform following the displacement of the first propeller shaft 10 in the vertical direction.

Furthermore, by forming gaps between the upper and lower sides of the block body 22 and the horizontal member 43 of the bracket 21, it is possible to reduce the occurrence of adhesive friction that is produced when the upper and lower sides of the block body 22 contact the horizontal member 43 even when the rubber-like elastic body 20 bends in the axial direction.

Next, in the lower block body 22 located between the shaft hole part 23 and the groove bottom part D, first slits 31B are formed inside in the radial direction, and a second slit 32B is formed outside in the radial direction.

The first slits 31B and the second slit 32B are each formed in an arc shape that is concentric with the shaft hole part 23. That is, the first slits 31B and the second slit 32B are formed in a long-hole shape to extend in the circumferential direction.

Two first slits 31B are provided spaced apart in the circumferential direction. More specifically, two first slits 31B are provided symmetrically in the left-right direction with respect to the left-right center position C1 passing through the center C of the shaft hole part 23. The left end of the left first slit 31B is located at a position L in the left-right direction that is substantially the same as the left end of the groove bottom part D, and the right end of the right first slit 31B is located at a position R in the left-right direction that is substantially the same as the right end of the groove bottom part D. Furthermore, the interval between the left and right first slits 31B is set to a distance to match the length of one first slit 31B in the circumferential direction. However, the first slits 31B may have an arbitrary shape, and, for example, two of left and right first slits 31B may be connected and formed as one.

The second slit 32B extends equidistantly on both circumferential sides from the left-right center position C1, and is formed to be symmetric in the left-right direction. Furthermore, in the circumferential direction, the left end part of the second slit 32B is positioned to overlap with the right end part of the left first slit 31B, and the right end part of the second slit 32B is positioned to overlap with the left end part of the right first slit 31B. Furthermore, the second slit 32B is longer in the circumferential direction than one first slit 31B, and has the same width in the radial direction as the first slit 31B. Furthermore, the second slit 32B is arranged, in the radial direction, in the middle among the groove bottom part D and the left and right first slits 31B. However, the second slit 32B may have an arbitrary shape, and, for example, may be formed so as to overlap with the whole of the two left and right first slits 31B in the circumferential direction.

Next, in the block body 22 between the left metal plate 26A and the shaft hole part 23, a third slit 33Ais formed inside in the radial direction, and a fourth slit 34Ais formed outside in the radial direction.

The third slit 33A and the fourth slit 34A are each formed in an arc shape that is concentric with the shaft hole part 23. That is, the third slit 33A and the fourth slit 34A are formed in a long-hole shape to extend in the circumferential direction.

The third slit 33A extends equidistantly on both circumferential sides from the vertical center position C2 passing through the center C of the shaft hole 23, and is formed to be symmetric in the vertical direction. The circumferential length and the radial width of the third slit 33A are formed larger than those of the first, second and fourth slits 31B, 32B and 34A.

Furthermore, in the center portion of the third slit 33A in the vertical direction, a protrusion P protruding radially inward from the radially outer inner peripheral surface of the third slit 33A is formed. However, the protrusion P may protrude radially outward from the inner peripheral surface on the radially inside of the third slit 33A.

The fourth slit 34A extends equidistantly on both circumferential sides from the vertical center position C2 and is formed to be symmetric in the vertical direction. Furthermore, the fourth slit 34A is positioned to overlap with the center part of the third slit 33A in the circumferential direction. Furthermore, the fourth slit 34A is arranged, in the radial direction, in the middle between the left metal plate 26A and the third slit 33A. However, the fourth slit 34A may have any shape, and, for example, may be formed so as to overlap the entire third slit 33A in the circumferential direction.

The main configurations of the upper and lower concave parts 24A and 24B, and the first to fourth slits 31A to 34B of the present embodiment have been described above. Meanwhile, the center bearing described in Patent Literature 1 is one in which concave grooves and slits are formed in a rubber-like elastic body. Although not illustrated, the center bearing of Patent Literature 1 is not provided with the second slits 32A and 32B and the fourth slit 34A and 34B.

With the center bearing of Patent Literature 1, like the present embodiment, concave grooves form gaps between the upper and lower sides of a rubber-like elastic body and the horizontal members of a bracket.

However, in the event such gaps are provided, for example, when the vehicle starts and a propeller shaft vibrates relatively significantly, the groove bottom parts of the concave grooves may bend downward and contact the horizontal members. In particular, in vehicles equipped with engines of large output, the load input to the propeller shaft from the transmission increases and the vertical displacement of the propeller shaft increases, and the groove bottom part can easily contact the horizontal member. Then, when the groove bottom part contacts the horizontal member, the transmission of vibration cannot be reduced due to the concave grooves, and the vibration to transmit to the chassis increases quickly.

Furthermore, in Patent Literature 1, like the present embodiment, first slits are formed in the rubber-like elastic body between the upper and lower sides of the block body and the horizontal member. However, by the time the rubber-like elastic body is deformed so much in the vertical direction that the groove bottom part contacts the horizontal member, the first slits are already vertically deformed and crushed, and it is likely that the increase in vibration at the time of the contact cannot be sufficiently absorbed only by the first slits.

By contrast with this, with the present embodiment, the second slits 32A and 32B are provided between the first slits 31A and 31B, and the groove bottom part D. Consequently, when the groove bottom part D of the concave grooves 24 contacts the horizontal member 43, the second slits 32A and 32B can deform in the vertical direction and absorb the vibration.

That is, in the present embodiment, as illustrated in FIG. 6, when the displacement of the first propeller shaft 10 in the vertical direction (see FIG. 1) is less than a predetermined value, the groove bottom part D does not contact the horizontal member 43. At this time, the rubber-like elastic body 20 and the first slits 31A and 31B can deform in the vertical direction and absorb the vibration of the first propeller shaft 10. Then, in this state, the second slits 32A and 32B are only slightly deformed in the vertical direction, and sufficient margins for crushing remain.

On the other hand, as illustrated in FIG. 7, when the displacement of the first propeller shaft 10 in the vertical direction is equal to or greater than a predetermined value, the groove bottom part D contacts the horizontal member 43. At this time, even if the first slits 31A and 31B are already deformed and crushed in the vertical direction, the second slits 32A and 32B can deform in the vertical direction and absorb the vibration of the first propeller shaft 10.

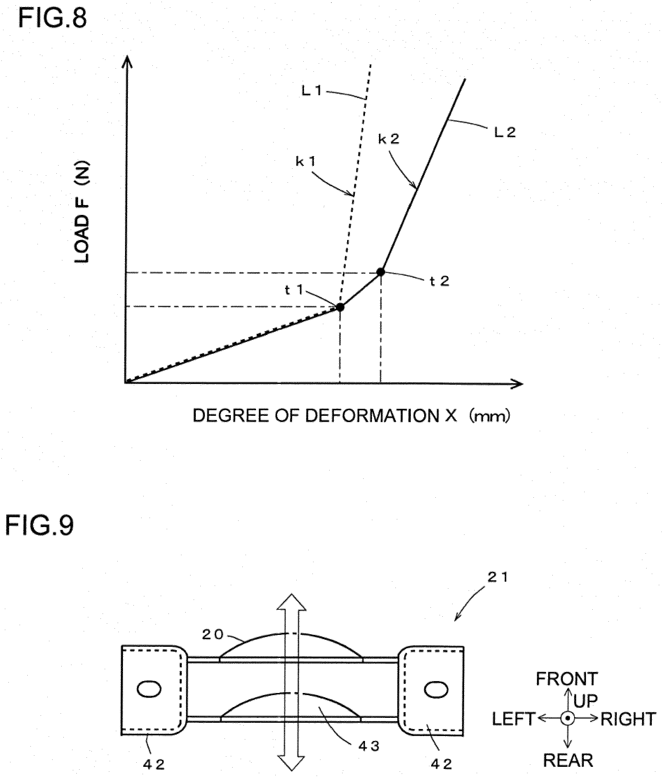

FIG. 8 is a graph to show the spring characteristics of the rubber-like elastic body 20. The vertical axis is the downward load F (N) input to the rubber-like elastic body 20, and the horizontal axis is the degree of downward deformation X (mm) of the rubber-like elastic body 20.

The dotted line L1 indicates the relationship between the load F and the degree of deformation X when second slits 32A and 32B are not provided, and the slope k1 of the dotted line L1 represents the spring constant (k1 = F/X) of the rubber-like elastic body 20. Furthermore, the solid line L2 indicates the relationship between the load F and the degree of deformation X when the second slits 32A and 32B are provided, and the slope k2 of the solid line L2 represents the spring constant (k2 = F/X) of the rubber-like elastic body 20. Furthermore, in the drawing, the point t1 represents the load F and the degree of deformation X when the groove bottom part D contacts the horizontal member 43, and the point t2 represents the load F and the degree of deformation X when the second slits 32A and 32B are crushed in the vertical direction.

First, until the groove bottom part D contacts the horizontal member 43 (t1), as indicated by the dotted line L1 and the solid line L2, regardless of whether there are second slits 32A and 32B or not, none of the spring constants k1 and k2 of the rubber-like elastic body 20 changes. That is, in this state, the rubber-like elastic body 20 is freely deformed in the vertical direction, and the first slits 31A and 31B are vertically deformed, so that the vibration of the first propeller shaft 10 can be absorbed.

Next, from the time when the groove bottom part D contacts the horizontal member 43 (t1), as indicated by the dotted line L1 and the solid line L2, the spring constant k1 without the second slits 32A and 32B increases quickly compared to the spring constant k2 when the second slits 32A and 32B are provided.

That is, in the case of the spring constant k1 without the second slits 32A and 32B, when the groove bottom part D contacts the horizontal member 43, the first slits 31A and 31B are already crushed in the vertical direction, so that the rubber-like elastic body 20 is little likely to deform quickly in the vertical direction. Accordingly, it becomes difficult to absorb the vibration of the first propeller shaft 10.

By contrast with this, in the event of the spring constant k2 with second slits 32A and 32B, even if the groove bottom part D contacts the horizontal member 43, the second slits 32A and 32B deform in the vertical direction, so that the rubber-like elastic body 20 can be deformed in the vertical direction relatively easily. Accordingly, more vibration of the first propeller shaft 10 can be absorbed.

Furthermore, as indicated by the solid line L2, in the event of the spring constant k2 with second slits 32A and 32B, the rubber-like elastic body 20 becomes difficult to deform only when the second slits 32A and 32B are crushed in the vertical direction (t2). Accordingly, the transmission of large vibration from the first propeller shaft 10 to the chassis can be reduced for the gap in time between the time the groove bottom part D contacts the horizontal member 43 (t1) and the time the second slits 32A and 32B are crushed in the vertical direction (t2).

Therefore, the center bearing 15 according to the present invention can absorb the vibration sufficiently with the rubber-like elastic body 20, even when the propeller shaft 1 vibrates relatively significantly.

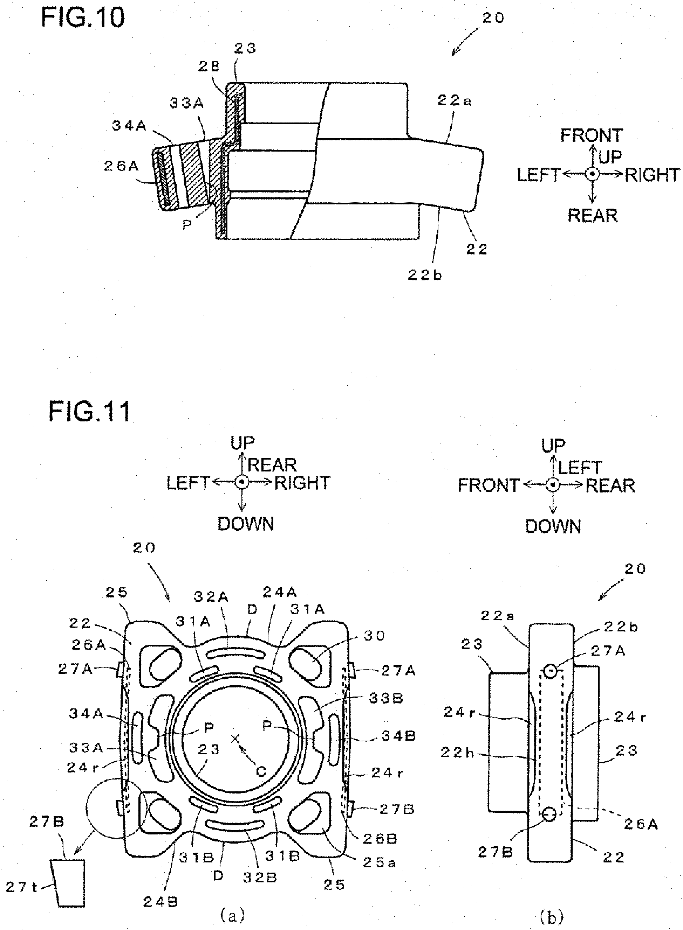

Meanwhile, with the present embodiment provides the following operational effects in addition to the above.
(1) Although not illustrated, in Patent Literature 1 described above, the groove bottom part of the concave grooves is not formed in an arc shape, and is formed in a linear shape extending in the left-right direction. In this case, it is difficult to secure the space for forming second slits in the rubber-like elastic body.
   By contrast with this, the groove bottom part D of the present embodiment is formed in an arc shape that is concentric with the shaft hole part 23, so that the central portions of the concave grooves 24A and 24B in the left-right direction protrude radially outward. Consequently, sufficient space for forming second slits 32A and 32B can be reserved in the rubber-like elastic body 20.
(2) To provide a means for absorbing the vibration of the propeller shaft sufficiently, it may be possible to form the rubber-like elastic body itself large, but this will increase the manufacturing cost of the center bearing. According to the present embodiment, concave grooves 24A and 24B and first and second slits 31A to 32B are provided, so that the rubber-like elastic body can be formed in minimal size while effectively absorbing the vibration. As a result of this, the manufacturing cost of the center bearing 15 can be reduced.
(3) As described above, although the present embodiment makes it possible to absorb the vibration in the vertical direction sufficiently by providing second slits 32A and 32B, the rubber-like elastic body 20 is deformed not only in the vertical direction but also in the left-right direction, and therefore, it is necessary to make the vertical and horizontal absorption characteristics uniform.
   So, with the rubber-like elastic body 20 of the present embodiment, fourth slit 34A and 34B are provided at positions radially outside the third slits 33A and 33B, so that the vibration in the left-right direction can be sufficiently absorbed. Consequently, it is possible to make the vertical and horizontal vibration absorption characteristics uniform.
(4) As illustrated in FIG. 9, the rubber-like elastic body 20 is also deformed in the axial direction. Particularly, with the present embodiment, as illustrated in FIG. 10, by providing the second slits 32A and 32B and the fourth slits 34A and 34B, the rubber-like elastic body 20 is easily deformed and bends in the axial direction. In addition, the rubber-like elastic body 20 may fall off the bracket 21 when the axial deformation becomes excessive.
   Furthermore, in the present embodiment, in the central portion of the third slits 33A and 33B in the vertical direction, protrusions P that protrude radially inward from the radially outer inner peripheral surfaces of the third slits 33A and 33B are formed. Consequently, when the rubber-like elastic body 20 is deformed and bends in the axial direction, the protrusions P contact the inner peripheral surface on the radially inner side of the third slit 33A, so that further bending of the rubber-like elastic body 20 can be reduced. As a result, it is possible to prevent the rubber-like elastic body 20 from falling off the bracket 21.
   Furthermore, according to the protrusions P of the third slits 33A and 33B, the protrusions P contact the inner peripheral surface on the radially inner side of the third slits 33A and 33B, so that the rubber-like elastic body 20 can be prevented from being excessively deformed in the left-right direction.
(5) The axial deformation of the rubber-like elastic body 20 is reduced by flat metal plates 26A and 26B that are embedded along the left and right sides. Furthermore, by allowing the rubber-like elastic body 20, reinforced with the metal plates 26A and 26B, with the second reinforcing ribs 46 of the bracket 21, the rubber-like elastic body 20 can be reliably prevented from falling off the bracket 21.

The above-described basic embodiment can be modified as follows or applied in the combination thereof. In the following description, the same reference numerals are used for the same components as those in the above-described embodiment, and a detailed description thereof will be omitted.

### (First Variation)

As illustrated in FIGs. 11A and 11B, the block body 22 of the first variation has concave parts 24r formed in the front surface 22a and the rear surface 22b of the central part 22h of the left and right sides.

Consequently, the central part 22h of the left and right sides in the axial direction is formed thin in the width direction, and the metal plates 26A and 26B are also formed small in accordance with the width of the central part 22h, so that the followability to the axial and radial displacements of the propeller shaft can be improved.

### (Second Variation)

As illustrated in FIGs. 11A and 11B, in a second variation, tapered tip surfaces 27t are formed at the tips of the protrusions 27A and 27B formed in the upper and lower parts of the left and right sides of the block body 22. That is, the protrusions 27A formed on the upper parts of the left and right sides are formed so that the tip surface 27t is inclined upward, and the protrusions 27B formed at the lower portions of the left and right sides are formed so that the tip surface 27t is inclined downward.

According to the second variation, when fitting the rubber-like elastic body 20 into the divided brackets 40A and 40B, the protrusions 27A and 27B can be easily engaged with the holes 41 of the divided vertical member 44.

### (Third Variation)

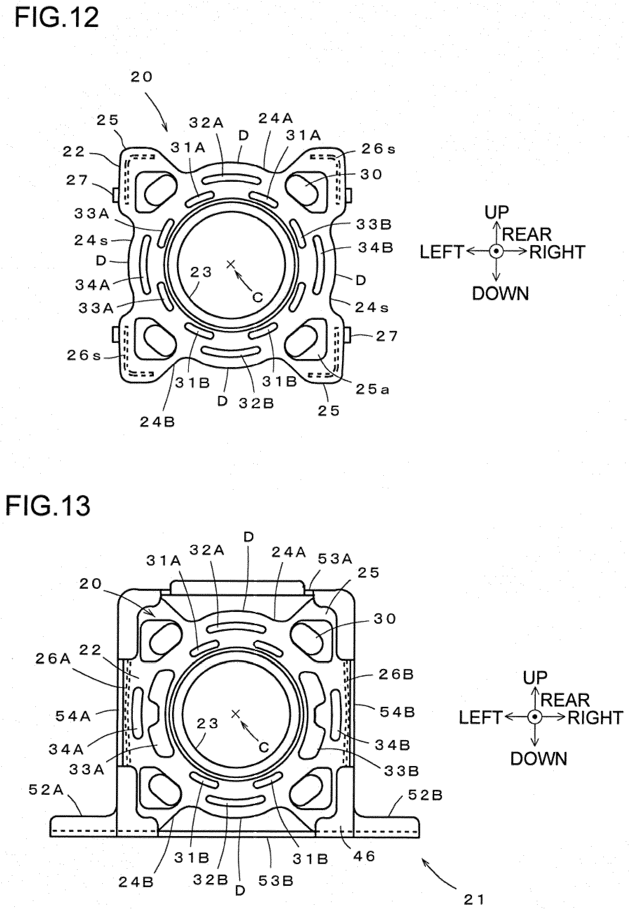

As illustrated in FIG. 12, in a third variation, concave grooves 24s are formed not only in the upper and lower sides but also in the left and right sides of the block body 22, and, furthermore, L-shaped metal plates 26s are embedded in the leg parts 25. Furthermore, in the third variation, the third slits 33A and 33B respectively have the same shape as the first slits 31A and 31B, and the fourth slits 34A and 34B respectively have the same shape as the second slits 32A and 32B.

### (Fourth Variation)

As illustrated in FIG. 13, the bracket 21 according to a fourth variation has an upper horizontal member 53A that extends in the left-right direction, and a pair of left and right vertical members 54A and 54B that are connected to both ends of the horizontal member 53A in the right-left direction, and is formed in a frame shape. Furthermore, a pair of flanges 52A and 52B, extending outward in the right-left direction, are formed at the lower ends of the vertical members 54A and 54B on both left and right sides. In addition, a detachable lower horizontal member 53B is provided between the flanges 52A and 52B on both left and right sides.

With the fourth variation, after inserting the rubber-like elastic body 20 into the bracket 21 with the lower horizontal member 53B removed, the lower horizontal member 53B is fitted, and the lower horizontal member 53B is fastened to the chassis together with the left and right flanges 52A and 52B with bolts and nuts.

## Claims

1. A center bearing (15) comprising a rubber-like elastic body (20) with a shaft hole part (23) for supporting a propeller shaft (10), and a bracket (21) that retains the rubber-like elastic body (20) to a chassis, where the rubber-like elastic body (20) is formed in a rectangular shape with a concave groove (24A, 24B) formed in a center in an upper side and a lower side of the rectangular rubber-like elastic body (20), and the bracket (21) is formed in a rectangular shape so as to cover the rectangular rubber-like elastic body (20), wherein:
the bracket (21) has a horizontal member (43) that extends in a left-right direction and faces the concave groove (24A, 24B);
the concave groove (24A, 24B) has a groove bottom part (D) that is spaced apart from the horizontal member (43) in a vertical direction; and
in the rubber-like elastic body (20) between the shaft hole part (23) and the groove bottom part (D), a first slit (31A, 31B) is formed,
wherein, when displacement of the propeller shaft (10) in the vertical direction is equal to or greater than a predetermined value, the groove bottom part (D) contacts the horizontal member (43),
**characterized in that** in the rubber-like elastic body (20) between the shaft hole part (23) and the groove bottom part (D), the first slit (31A, 31B) is formed inside and a second slit (32A, 32B) is formed outside, in a radial direction with respect to a center of the shaft hole part (23),
as a downward load input to the rubber-like elastic body (20) increases, a spring constant of the rubber-like elastic body (20) increases in two steps,
the first increase occurs when the groove bottom part (D) contacts the horizontal member (43), and thereafter the second increase occurs when the load increases by a predetermined value.

2. The center bearing (15) according to claim 1, wherein the groove bottom part (D), the first slit (31A, 31B) and the second slit (32A, 32B) are each formed in an arc shape that is concentric with the shaft hole part (23).

3. The center bearing (15) according to claim 1 or 2, wherein the second slit (32A, 32B) is arranged so as to overlap at least part of the first slit (31A, 31B) in a circumferential direction with respect to the center of the shaft hole part (23).

4. The center bearing (15) according to any one of claims 1 to 3, wherein:
in the rubber-like elastic body (20), metal plates (26A, 26B) are embedded along left and right sides of the rubber-like elastic body (21); and
in the rubber-like elastic body (20), between the metal plate (26A, 26B) and the shaft hole part (23), a third slit (33A, 33B) is formed inside and a fourth slit (34A, 34B) is formed outside in the radial direction.

5. The center bearing (15) according to claim 4, wherein the third slit and the fourth slit (33A, 33B, 34A, 34B) are each formed in an arc shape that is concentric with the shaft hole part (23).

6. The center bearing (15) according to claim 4 or 5, wherein the fourth slit (34A, 34B) is arranged so as to overlap at least part of the third slit (33A, 33B) in the circumferential direction with respect to the center of the shaft hole part (23).

7. The center bearing (15) according to any one of claims 4 to 6, wherein, in a central portion of the third slit (33A, 33B) in the vertical direction, a protruding part (P) that protrudes inward or outward in the radial direction from an inner peripheral surface of the third slit (33A, 33B) is formed.

## Patentansprüche

1. Mittellager (15), das einen gummiartigen elastischen Körper (20) mit einem Wellenlochteil (23) zum Lagern einer Propellerwelle (10) und eine Halterung (21) umfasst, die den gummiartigen elastischen Körper (20) an einem Chassis hält, wobei der gummiartige elastische Körper (20) in einer rechteckigen Form mit einer konkaven Nut (24A, 24B) ausgebildet ist, die in einer Mitte in einer Oberseite und einer Unterseite des gummiartigen elastischen Körpers (20) ausgebildet ist, und die Halterung (21) in einer rechteckigen Form ausgebildet ist, so dass sie den rechteckigen gummiartigen elastischen Körper (20) abdeckt, wobei:
die Halterung (21) ein horizontales Element (43) aufweist, das sich in einer Richtung von links nach rechts erstreckt und der konkaven Nut (24A, 24B) zugewandt ist;
die konkave Nut (24A, 24B) einen Nutbodenteil (D) aufweist, der von dem horizontalen Element (43) in einer vertikalen Richtung beabstandet ist; und
in dem gummiartigen elastischen Körper (20) zwischen dem Wellenlochteil (23) und dem Nutbodenteil (D) ein erster Schlitz (31A, 31B) ausgebildet ist,
wobei, wenn eine Verschiebung der Propellerwelle (10) in der vertikalen Richtung gleich oder größer als ein vorbestimmter Wert ist, der Nutbodenteil (D) mit dem horizontalen Element (43) in Kontakt kommt,
**dadurch gekennzeichnet, dass** in dem gummiartigen elastischen Körper (20) zwischen dem Wellenlochteil (23) und dem Nutbodenteil (D) in einer radialen Richtung in Bezug auf eine Mitte des Wellenlochteils (23) der erste Schlitz (31A, 31B) innen ausgebildet ist und ein zweiter Schlitz (32A, 32B) außen ausgebildet ist,
wobei, wenn sich eine in den gummiartigen elastischen Körper (20) eingebrachte, nach unten gerichtete Belastung erhöht, sich eine Federkonstante des gummiartigen elastischen Körpers (20) in zwei Schritten erhöht,
wobei die erste Erhöhung erfolgt, wenn der Nutbodenteil (D) mit dem horizontalen Element (43) in Kontakt kommt, und anschließend die zweite Erhöhung erfolgt, wenn sich die Belastung um einen vorbestimmten Wert erhöht.

2. Mittellager (15) nach Anspruch 1, wobei der Nutbodenteil (D), der erste Schlitz (31A, 31B) und der zweite Schlitz (32A, 32B) jeweils in einer Bogenform ausgebildet sind, die konzentrisch mit dem Wellenlochteil (23) ist.

3. Mittellager (15) nach Anspruch 1 oder 2, wobei der zweite Schlitz (32A, 32B) so angeordnet ist, dass er zumindest einen Teil des ersten Schlitzes (31A, 31B) in einer Umfangsrichtung in Bezug auf die Mitte des Wellenlochteils (23) überlagert.

4. Mittellager (15) nach einem der Ansprüche 1 bis 3, wobei:
in den gummiartigen elastischen Körper (20) entlang einer linken und rechten Seite des gummiartigen elastischen Körpers (21) Metallplatten (26A, 26B) eingebettet sind; und
in dem gummiartigen elastischen Körper (20) zwischen der Metallplatte (26A, 26B) und dem Wellenlochteil (23) in der radialen Richtung innen ein dritter Schlitz (33A, 33B) ausgebildet ist und außen ein vierter Schlitz (34A, 34B) ausgebildet ist.

5. Mittellager (15) nach Anspruch 4, wobei der dritte Schlitz und der vierte Schlitz (33A, 33B, 34A, 34B) jeweils in einer Bogenform ausgebildet sind, die konzentrisch mit dem Wellenlochteil (23) ist.

6. Mittellager (15) nach Anspruch 4 oder 5, wobei der vierte Schlitz (34A, 34B) so angeordnet ist, dass er zumindest einen Teil des dritten Schlitzes (33A, 33B) in einer Umfangsrichtung in Bezug auf die Mitte des Wellenlochteils (23) überlagert.

7. Mittellager (15) nach einem der Ansprüche 4 bis 6, wobei in einem mittleren Abschnitt des dritten Schlitzes (33A, 33B) in der vertikalen Richtung ein hervorstehender Teil (P) ausgebildet ist, der in der radialen Richtung von einer Innenumfangsfläche des dritten Schlitzes (33A, 33B) nach innen oder nach außen hervorsteht.

## Revendications

1. Palier central (15) comprenant un corps élastique analogue à du caoutchouc (20) avec une partie de trou d'arbre (23) pour supporter un arbre de transmission (10), et un support (21) qui retient le corps élastique analogue à du caoutchouc (20) sur un châssis, où le corps élastique analogue à du caoutchouc (20) est formé dans une forme rectangulaire avec une rainure concave (24A, 24B) formée dans un centre dans un côté supérieur et un côté inférieur du corps élastique analogue à du caoutchouc rectangulaire (20), et le support (21) est formé dans une forme rectangulaire de manière à recouvrir le corps élastique analogue à du caoutchouc rectangulaire (20), dans lequel :
le support (21) présente un élément horizontal (43) qui s'étend dans une direction gauche-droite et fait face à la rainure concave (24A, 24B) ;
la rainure concave (24A, 24B) présente une partie de fond de rainure (D) qui est espacée de l'élément horizontal (43) dans une direction verticale ; et
une première fente (31A, 31B) est formée dans le corps élastique analogue à du caoutchouc (20) entre la partie de trou d'arbre (23) et la partie de fond de rainure (D),
dans lequel, lorsque le déplacement de l'arbre de transmission (10) dans la direction verticale est égal ou supérieur à une valeur prédéterminée, la partie de fond de rainure (D) vient en contact avec l'élément horizontal (43),
**caractérisé en ce que** dans le corps élastique analogue à du caoutchouc (20) entre la partie de trou d'arbre (23) et la partie de fond de rainure (D), la première fente (31A, 31B) est formée à l'intérieur, et une seconde fente (32A, 32B) est formée à l'extérieur, dans une direction radiale par rapport à un centre de la partie de trou d'arbre (23),
lorsqu'une charge vers le bas appliquée au corps élastique analogue à du caoutchouc (20) augmente, une constante de ressort du corps élastique analogue à du caoutchouc (20) augmente en deux étapes,
la première augmentation survient lorsque la partie de fond de rainure (D) vient en contact avec l'élément horizontal (43), puis la seconde augmentation survient lorsque la charge augmente d'une valeur prédéterminée.

2. Palier central (15) selon la revendication 1, dans lequel la partie de fond de rainure (D), la première fente (31A, 31B) et la seconde fente (32A, 32B) sont chacune formées dans une forme d'arc qui est concentrique avec la partie de trou d'arbre (23).

3. Palier central (15) selon la revendication 1 ou 2, dans lequel la seconde fente (32A, 32B) est agencée de manière à chevaucher au moins une partie de la première fente (31A, 31B) dans une direction circonférentielle par rapport au centre de la partie de trou d'arbre (23).

4. Palier central selon l'une quelconque des revendications 1 à 3, dans lequel :
dans le corps élastique analogue à du caoutchouc (20), des plaques métalliques (26A, 26B) sont intégrées le long des côtés gauche et droit du corps élastique analogue à du caoutchouc (21) ; et
dans le corps élastique analogue à du caoutchouc (20), entre la plaque métallique (26A, 26B) et la partie de trou d'arbre (23), une troisième fente (33A, 33B) est formée à l'intérieur et une quatrième fente (34A, 34B) est formée à l'extérieur dans la direction radiale.

5. Palier central (15) selon la revendication 4, dans lequel la troisième fente et la quatrième fente (33A, 33B, 34A, 34B) sont formées chacune dans une forme d'arc qui est concentrique à la partie de trou d'arbre (23).

6. Palier central (15) selon la revendication 4 ou 5, dans lequel la quatrième fente (34A, 34B) est agencée de manière à chevaucher au moins une partie de la troisième fente (33A, 33B) dans la direction circonférentielle par rapport au centre de la partie de trou d'arbre (23).

7. Palier central (15) selon l'une quelconque des revendications 4 à 6, dans lequel, dans une partie centrale de la troisième fente (33A, 33B) dans la direction verticale, est formée une partie saillante (P) qui fait saillie vers l'intérieur ou vers l'extérieur dans la direction radiale à partir d'une surface périphérique intérieure de la troisième fente (33A, 33B) .
